# FASCICULE DE BREVET EUROPEEN

(11) **EP 4 310 269 B1**
(45) Date de publication et mention de la délivrance du brevet: **18.12.2024**
(21) Numéro de dépôt: 23183965.5
(22) Date de dépôt: 06.07.2023
(51) Int. Cl.: E04D 13/03, E04D 13/035, F21S 11/00

(54) **MODULE BIOCLIMATIQUE POUR BATIMENT**
BIOKLIMAMODUL FÜR EIN GEBÄUDE
BIOCLIMATIC MODULE FOR BUILDING

(30) Priorité: 22.07.2022 FR 2207564
(43) Date de publication de la demande: 24.01.2024
(73) Titulaire: L.E Design Production Services, 31190 Grazac (FR)
(72) Inventeur: ESTEBE, Laurent, 31190 Grazac (FR)
(74) Mandataire: Bringer IP

(56) Documents cités:
- EP-A2- 0 869 229
- US-A- 4 883 340
- US-A- 5 493 824

## Description

### Domaine technique de l'invention

L'invention concerne un module bioclimatique pour bâtiment, c'est-à-dire un module configuré pour pouvoir tirer le meilleur parti possible du rayonnement solaire. Un tel module bioclimatique peut former, selon différents modes de réalisation, soit une fenêtre bioclimatique, soit un équipement d'un système de chauffage, soit un accessoire d'un système de production d'énergie.

### Arrière-plan technologique

La construction et/ou la rénovation d'un bâtiment bioclimatique est en plein essor. Un bâtiment bioclimatique vise à tirer parti des caractéristiques particulières du lieu d'implantation du bâtiment et notamment du rayonnement solaire.

Un bâtiment bioclimatique favorise les économies d'énergie tout en limitant l'impact écologique de l'utilisation du bâtiment. Ainsi, un bâtiment bioclimatique permet de réduire les dépenses de chauffage, de climatisation et d'éclairage.

Lors de la construction d'une habitation bioclimatique, il faut prendre en compte les contraintes du lieu d'implantation et notamment des variations de la position du soleil au cours de l'année.

Ainsi, dans l'hémisphère nord, en hiver, le soleil se lève au Sud-Est et se couche au Sud-Ouest, en restant très bas au cours de la journée (environ 22° d'élévation au solstice d'hiver). Dès lors, la façade Sud reçoit principalement un rayonnement valorisable durant l'hiver. Il est donc recommandé de maximiser la surface vitrée au Sud pour que la lumière du soleil ainsi que ses rayons UV puissent chauffer le bâtiment. A l'inverse, en été, le soleil se lève au Nord-Est et se couche au Sud-Ouest, en montant assez haut au cours de la journée (environ 78° d'élévation au solstice d'été). Il est donc nécessaire de limiter les surfaces vitrées orientées au Sud pour éviter les surchauffes du bâtiment.

Il apparait donc que la configuration optimale en hiver est en contradiction avec la configuration optimale en été. Pour résoudre cette difficulté, il est connu d'installer des protections solaires horizontales au-dessus des zones vitrées au Sud pour bloquer le rayonnement solaire en été, tout en permettant de bénéficier du rayonnement solaire direct en hiver.

Cette solution n'est pas optimale et ne tire pas le meilleur bénéficie possible du rayonnement solaire. En outre, cette solution n'est pas évolutive au cours d'une même journée.

Il existe donc un besoin de disposer d'un module bioclimatique pour bâtiment qui permet de tirer un meilleur bénéfice du rayonnement solaire.

Les documents EP 0 869 229 A2, US 4 883 340 A et US 5 4993 824 A divulguent des modules comprenant un châssis fixe, un caisson monté mobile en pivotement et un réflecteur solaire.

### Objectifs de l'invention

L'invention vise à fournir un module bioclimatique pour bâtiment qui résout au moins certains des inconvénients des solutions connues.

L'invention vise en particulier à fournir, dans au moins un mode de réalisation, un module bioclimatique qui optimise l'utilisation du rayonnement solaire au cours d'une même journée et cela quelle que soit la période de l'année.

L'invention vise aussi à fournir, dans au moins un mode de réalisation, un module bioclimatique qui soit facile à installer sur une toiture d'un bâtiment.

L'invention vise aussi à fournir, dans au moins un mode de réalisation, un module bioclimatique qui puisse former une fenêtre bioclimatique pour bâtiment.

L'invention vise aussi à fournir, dans au moins un mode de réalisation, un module bioclimatique qui puisse former un équipement d'un système de chauffage du bâtiment sur lequel il est installé.

L'invention vise aussi à fournir, dans au moins un mode de réalisation, un module bioclimatique qui puisse former un équipement d'un système de production d'énergie, par exemple en améliorant le rendement d'un panneau solaire.

L'invention vise aussi à fournir, dans au moins un mode de réalisation, un module bioclimatique qui contribue à minimiser les espaces vitrés qui seraient surexposés en période estivale et à les amplifier en période hivernale.

### Exposé de l'invention

Pour ce faire, l'invention concerne un module bioclimatique pour bâtiment comprenant une toiture, ledit module comprend :
- un châssis fixe destiné à être solidarisé au bâti de ladite toiture du bâtiment, ledit châssis fixe définissant une enceinte et comprenant une ouverture, dite ouverture supérieure, agencée au-dessus de ladite enceinte et configurée pour pouvoir laisser passer un rayonnement solaire vers ladite enceinte,
- un caisson monté mobile en pivotement sur ledit châssis fixe et comprenant une surface vitrée s'étendant en regard de ladite ouverture supérieure dudit châssis fixe et orientée vers le ciel, une fois le châssis fixe solidarisé au bâti de la toiture du bâtiment, de manière à pouvoir laisser passer un rayonnement solaire vers ladite ouverture supérieure dudit châssis fixe,
- un réflecteur solaire articulé sur ledit caisson mobile et configuré pour pouvoir réfléchir un rayonnement solaire incident vers ladite surface vitrée dudit caisson mobile, ledit réflecteur s'étendant au-dessus de ladite surface vitrée.

Le module bioclimatique selon l'invention présente donc la particularité de comprendre un caisson mobile en pivotement sur un châssis fixe solidarisé au bâti de la toiture du bâtiment. Le bâti de la toiture peut être une charpente ou toute ossature destinée à porter la couverture du bâtiment. Le module bioclimatique selon l'invention est donc destiné à former un élément qui remplace localement la couverture du bâtiment. Le module bioclimatique selon l'invention peut être monté sur tout type de toitures, quelle que soit son inclinaison et son orientation.

Le caisson mobile du module bioclimatique selon l'invention est en outre surmonté d'un réflecteur solaire articulé (par exemple par une liaison pivot) de telle sorte qu'il soit possible d'orienter le réflecteur pour qu'un rayonnement solaire incident soit dévié vers la surface vitrée du caisson mobile, elle-même en regard de l'ouverture supérieure du châssis fixe qui débouche dans l'enceinte du châssis fixe. Ainsi, le module bioclimatique selon l'invention est configuré pour pouvoir amener le rayonnement solaire vers l'enceinte du châssis fixe.

Le caisson étant monté mobile en pivotement sur le châssis fixe, il est possible d'orienter le caisson mobile et le réflecteur par rapport au soleil pour réguler (en particulier pour maximiser ou minimiser) le rayonnement solaire incident dévié vers l'enceinte du châssis fixe.

Le réflecteur solaire du module bioclimatique selon l'invention est avantageusement installé au-dessus de la surface vitrée. A ce titre, le réflecteur solaire est un réflecteur externe s'étendant au-dessus de la surface vitrée du caisson mobile du module bioclimatique. Ainsi, la combinaison du réflecteur solaire articulé et installé au-dessus de la surface vitrée et du caisson mobile monté en pivotement permet d'orienter le caisson mobile et le réflecteur par rapport au soleil pour réguler le rayonnement solaire incident dévié vers l'enceinte du châssis fixe.

Le module bioclimatique selon l'invention forme ainsi un module, qui à l'image d'un tournesol, peut suivre le soleil pour réguler le rayonnement admis dans l'enceinte. Le module bioclimatique selon l'invention permet donc d'adapter le rayonnement solaire reçu en fonction des besoins et/ou du confort visé.

Selon une première variante de l'invention, le châssis fixe comprend une surface inférieure transparente agencée verticalement à l'opposé de ladite ouverture supérieure de manière à pouvoir laisser le rayonnement solaire pénétrer ledit bâtiment, formant ainsi une fenêtre bioclimatique du bâtiment.

Selon cette variante, l'enceinte du châssis fixe est traversante verticalement de telle sorte que les rayons lumineux qui pénètrent l'enceinte du châssis fixe peuvent poursuivre leur cheminement jusqu'à l'intérieur du bâtiment. En d'autres termes, le module selon cette variante forme une fenêtre bioclimatique. La surface inférieure transparente peut par exemple être une surface vitrée. Selon une autre variante, elle peut être dénuée de toute matière et être formée d'une simple ouverture.

La fenêtre bioclimatique selon cette variante permet de réguler (notamment maximiser) la quantité de lumière et de rayons solaires pénétrant le bâtiment, quelle que soit la période de l'année et quelle que soit l'heure de la journée, en orientant judicieusement le caisson mobile et le réflecteur solaire par rapport à la position du soleil.

La fenêtre bioclimatique selon cette variante de l'invention peut être mis en oeuvre lors de la construction d'un bâtiment ou en remplacement d'une fenêtre de toit existante.

La fenêtre bioclimatique selon l'invention permet donc d'aller chercher la lumière et la chaleur en hiver (dans l'hémisphère Nord), et de tourner le dos au soleil en été (dans l'hémisphère Nord) laissant alors la luminosité indirecte pénétrer le bâtiment, mais pas le rayonnement direct.

Bien entendu, la fenêtre bioclimatique selon l'invention peut aussi être utilisé dans l'hémisphère Sud pour aller chercher la lumière et la chaleur en été et pour tourner le dos au soleil en hiver.

En outre, la fenêtre bioclimatique permet d'optimiser le rayonnement solaire quelle que soit l'orientation de la toiture dans la mesure où le caisson mobile est monté en pivotement sur le châssis solidaire de la toiture.

Selon une autre variante de réalisation, le châssis fixe comprend une paroi pleine agencée verticalement à l'opposé de ladite ouverture supérieure de manière à définir une enceinte hermétique permettant d'emmagasiner la chaleur générée par le rayonnement solaire dans l'enceinte, formant ainsi un équipement d'un système de chauffage.

Selon cette variante, l'enceinte du châssis fixe est fermée sur la partie inférieure de manière à empêcher la propagation du rayonnement solaire vers le bâtiment. Cela permet de faire monter en température l'enceinte hermétique du châssis fixe. Cette enceinte hermétique du module bioclimatique peut ainsi être utilisée comme une source de chaleur d'un système de chauffage, par exemple en y logeant des conduites de circulation d'un fluide caloporteur qui va capter la chaleur de l'enceinte. Ces conduites peuvent être utilisées pour chauffer un ballon d'eau chaude d'un système de chauffage d'eau sanitaire, pour alimenter un plancher chauffant ou alimenter un circulateur d'air.

Selon une autre variante, un panneau solaire, tel qu'un panneau photovoltaïque ou un panneau solaire thermique est agencé dans l'enceinte définie par le châssis fixe de telle sorte que le module bioclimatique contribue à améliorer le rendement du panneau solaire en dirigeant le rayonnement solaire vers le panneau solaire logé dans l'enceinte. En pratique, on vient agencer le module bioclimatique sur le panneau solaire déjà installé sur une toiture d'un bâtiment, voire sur toute autre surface, cette surface formant alors la paroi pleine du châssis fixe. Un module bioclimatique selon cette variante forme ainsi un accessoire d'un système de production d'énergie, en optimisant l'énergie produite par le panneau solaire coiffé par le module bioclimatique selon l'invention.

Quel que soit le mode d'utilisation du module bioclimatique selon l'invention (fenêtre, système de chauffage, système de production d'énergie), le module comprend avantageusement des moyens motorisés d'entrainement en pivotement dudit caisson mobile sur ledit châssis fixe.

Selon cette variante, le caisson mobile est entrainé en pivotement par rapport au châssis fixe par des moyens motorisés. Ces moyens motorisés permettent d'automatiser le pivotement du caisson mobile par rapport au châssis fixe.

Avantageusement et selon l'invention, lesdits moyens motorisés comprennent un moteur électrique en prise avec une couronne dentée solidaire dudit caisson mobile.

Selon cette variante, le pivotement du caisson mobile par rapport au châssis fixe est obtenu par une couronne dentée solidaire du caisson mobile, en prise avec un pignon entrainé en rotation par un moteur électrique. Il est également possible de prévoir un réducteur qui relie mécaniquement le pignon du moteur électrique et la couronne dentée.

Avantageusement et selon cette variante, ladite couronne dentée est surmontée d'un disque portant solidairement ledit caisson mobile et pourvu de rouleaux de centrage dudit caisson mobile sur ledit châssis fixe.

Ces rouleaux de centrage permettent de maintenir le caisson mobile centré sur le châssis fixe lors du pivotement du caisson mobile.

Avantageusement, un module bioclimatique selon l'invention comprend en outre une unité de commande des moyens motorisés configurée pour pouvoir piloter lesdits moyens motorisés en fonction de données représentatives de la position du soleil.

Selon cette variante, l'unité de commande pilote les moyens motorisés en fonction de la position du soleil, en particulier son azimut et son élévation, ce qui permet par exemple de maximiser le rayonnement solaire qui pénètre le bâtiment (dans le cas d'une utilisation du module bioclimatique en tant que fenêtre) en orientant le réflecteur solaire, par pivotement du caisson mobile, vers le soleil, ou au contraire de minimiser le rayonnement solaire en orientant le réflecteur solaire, par pivotement du caisson mobile, à l'opposé du soleil. D'une manière générale, l'unité de commande permet de réguler le rayonnement solaire admis au sein de l'enceinte du châssis fixe.

Avantageusement, le module selon l'invention comprend en outre des moyens de déplacement linéaire du réflecteur par rapport audit caisson mobile.

Cette variante permet d'optimiser le rayonnement solaire réfléchi vers l'enceinte en ajustant la distance qui sépare le réflecteur solaire et la surface vitrée du caisson mobile. Ces moyens de déplacement linéaire peuvent par exemple être formés par des vérins, notamment des vérins hydrauliques et/ou électriques. Ces vérins sont de préférence pilotés par l'unité de commande.

Le réflecteur solaire peut avantageusement être déplacé par rapport à la surface vitrée du caisson mobile en rotation (par l'articulation pivot du réflecteur sur le caisson mobile).

Avantageusement et selon l'invention, le module bioclimatique comprend en outre un capteur solaire configuré pour pouvoir alimenter en énergie électrique lesdits moyens motorisés d'entrainement en pivotement dudit caisson mobile sur ledit châssis fixe. Cela permet au module bioclimatique de s'auto-alimenter en énergie. En fonction de l'énergie disponible, il est également possible de prévoir une alimentation d'appoint pour actionner les moyens de pivotement du caisson mobile par rapport au châssis fixe notamment.

Avantageusement et selon l'invention, le module bioclimatique comprend en outre un store solaire agencé au verso dudit réflecteur solaire de manière à pouvoir bloquer le rayonnement solaire direct.

Selon cette variante avantageuse, un store solaire est monté au verso du réflecteur de telle sorte qu'il puisse être utilisé pour bloquer le rayonnement solaire. Cela est particulièrement utile dans le cadre de la fenêtre bioclimatique pour limiter l'exposition directe au soleil pendant les périodes de forte chaleur. Le store solaire étant monté au dos du réflecteur solaire, l'articulation du réflecteur solaire (par exemple une liaison pivot) permet d'orienter le store solaire et d'optimiser l'agencement du store solaire pour entraver la propagation directe du rayonnement lumineux vers l'enceinte du châssis fixe, et par suite vers le bâtiment.

L'invention concerne également un module bioclimatique, caractérisé en combinaison par tout ou partie des caractéristiques mentionnées ci-dessus ou ci-après.

Le module selon l'invention est de préférence monté sur le bâti d'une toiture d'un bâtiment. Cela étant, il est aussi possible de prévoir d'installer directement le module sur le sol dans le cas où le module forme un équipement d'un système de chauffage ou un accessoire d'un système de production d'énergie. Dans ce cas, le châssis fixe est directement fixé au sol ou sur une structure, elle-même fixée au sol.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective éclatée d'une fenêtre bioclimatique selon un mode de réalisation de l'invention,
[Fig. 2] est une vue schématique en coupe d'un module bioclimatique selon un mode de réalisation de l'invention monté sur un bâtiment,
[Fig. 3] est une vue schématique en coupe d'une fenêtre bioclimatique selon un mode de réalisation de l'invention orientée de manière à pouvoir maximiser le rayonnement solaire direct admis dans le bâtiment,
[Fig. 4] est une vue schématique en coupe d'une fenêtre bioclimatique selon un mode de réalisation de l'invention orientée de manière à pouvoir minimiser le rayonnement solaire direct admis dans le bâtiment,
[Fig. 5] est un plan cinématique d'un module bioclimatique selon un mode de réalisation de l'invention,
[Fig. 6] est une vue schématique en perspective éclatée d'un module bioclimatique selon un autre mode de réalisation de l'invention formant un équipement d'un système de chauffage, et sur laquelle un arraché permet de visualiser les conduites de circulation du système de chauffage,
[Fig. 7] est une vue schématique en coupe du module bioclimatique de la figure 6 monté sur la toiture d'un bâtiment et relié à un système de chauffage,
[Fig. 8] est une vue schématique en perspective éclatée d'un module bioclimatique selon un autre mode de réalisation de l'invention formant un accessoire d'un système de production d'énergie.

### Description détaillée d'un mode de réalisation de l'invention

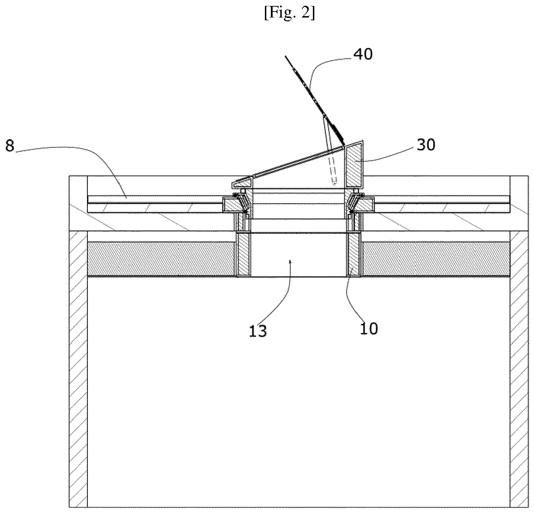

Sur les figures, les échelles et les proportions ne sont pas strictement respectées et ce, à des fins d'illustration et de clarté. Dans toute la description détaillée qui suit en référence aux figures, sauf indication contraire, chaque élément du module bioclimatique est décrit tel qu'il est agencé lorsque le module est monté sur une toiture d'un bâtiment. Cette configuration est notamment représentée sur les figures 2, 3, 4 et 7.

En outre, les éléments identiques, similaires ou analogues sont désignés par les mêmes références sur toutes les figures.

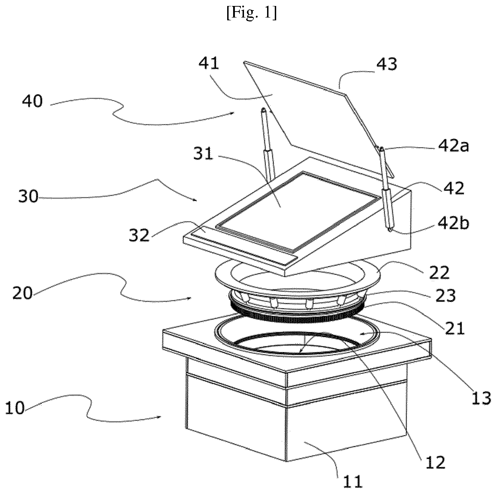

La figure 1 illustre schématiquement, en vue éclatée, un module bioclimatique selon un mode de réalisation de l'invention comprenant principalement un châssis fixe 10, un caisson 30 monté mobile en pivotement sur le châssis fixe 10, un réflecteur solaire 40 relié mécaniquement au caisson mobile 30, et des moyens motorisés 20 d'entrainement en pivotement du caisson mobile 30 sur ledit châssis fixe 10. La figure 2 illustre, en coupe, le module bioclimatique de la figure 1 fixé au bâti d'un bâtiment.

Les différents éléments du module bioclimatique des figures 1 et 2 vont maintenant être décrits plus en détail.

Le premier élément est le châssis fixe 10 qui comprend, selon le mode de réalisation des figures 1 et 2, un carter parallélépipédique 11 formé de quatre parois latérales, par exemple en tôle ou tout matériau rigide équivalent, dans lequel est logée une enceinte 12 cylindrique surmontée d'une ouverture 13 circulaire supérieure (potentiellement conique). Bien évidemment, rien n'empêche d'utiliser un carter présentant une forme non parallélépipédique.

Le carter 11 est destiné à être solidarisé au bâti de la toiture 8 d'un bâtiment par tout type de moyen. Il peut par exemple s'agir d'un montage par encastrement, par vissage, par boulonnage, etc. Ce montage est représenté schématiquement sur la figure 2. L'ouverture supérieure 13 est configurée pour pouvoir laisser passer le rayonnement solaire vers l'enceinte 12.

Le deuxième élément est le caisson mobile 30 qui est formé, selon le mode de réalisation des figures, par une surface supérieure vitrée 31, inclinée par rapport à l'horizontal, et des parois latérales rigides. La partie inférieure du caisson mobile est dénuée de matière, selon le mode de réalisation des figures, de manière à laisser le rayonnement solaire cheminer librement vers l'ouverture supérieure 13 du châssis fixe. Selon un autre mode de réalisation, cette partie inférieure peut-être vitrée. L'inclinaison de la surface vitrée 31 par rapport à l'horizontal est par exemple de l'ordre de 20°. Bien évidemment, d'autres inclinaisons peuvent être prévues selon les caractéristiques de l'ensoleillement du lieu d'installation. Cette inclinaison vise à permettre de recevoir le rayonnement solaire après réflexion par un réflecteur solaire 40 décrit ultérieurement.

Le troisième élément est formé par les moyens 20 d'entrainement en pivotement du caisson mobile 30 sur le châssis fixe 10.

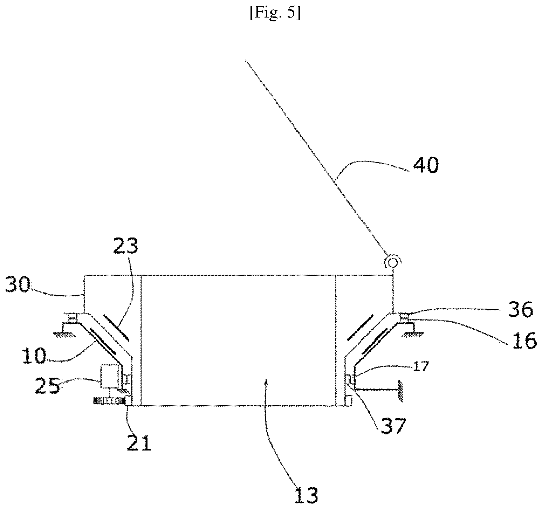

Ces moyens d'entrainement comprennent, selon le mode de réalisation des figures, une couronne dentée 21 en prise avec un moteur électrique 25, représenté uniquement sur la figure 5 à des fins de clarté. Cette couronne dentée 21 est surmontée et solidaire d'un disque 22 qui porte lui-même solidairement le caisson mobile 30. La liaison mécanique entre le disque 22 et le caisson mobile 30 peut-être réalisée par tout type de moyens connus. Cette liaison mécanique est par exemple obtenue par encastrement, par vissage, par boulonnage, par collage, par soudage, etc.

Les moyens d'entrainement comprennent en outre des rouleaux de centrage 23 qui s'étendent chacun entre la couronne dentée 21 et le disque 22. Ces rouleaux sont régulièrement répartis sur toute la périphérie des moyens d'entraînement 20 et sont configurés pour pouvoir venir rouler sur la surface intérieure du châssis qui délimite l'ouverture supérieure 13, et faciliter le pivotement du caisson mobile 30 par rapport au châssis fixe 10. Chaque rouleau 23 est par exemple formé d'un axe fixe solidarisé entre la couronne dentée 21 et le disque 22 et portant une garniture monté mobile en rotation autour de l'axe fixe. Selon un autre mode de réalisation, chaque rouleau comprend un axe solidaire d'une garniture, cet axe étant monté mobile en rotation par rapport à la couronne dentée 21 et le disque 22, par exemple par l'intermédiaire de roulements à billes agencés à chaque extrémité de l'axe.

Le moteur électrique d'entrainement de la couronne dentée 21 peut être de tout type connu. Il est de préférence alimenté en énergie électrique à partir d'un capteur solaire 32 agencé sur la surface supérieure du caisson mobile 30.

Ce moteur électrique est de préférence piloté par une unité de commande (non représenté sur les figures à des fins de clarté). Cette unité de commande comprend par exemple au moins un processeur, une carte électronique comprenant des ports d'entrées configurés pour pouvoir recevoir des données représentatives de la position du soleil, et des ports de sorties configurés pour transmettre des commandes de pilotage au moteur électrique. La carte électronique embarque également un logiciel configuré pour déterminer la commande du moteur électrique à partir des données reçues sur les ports d'entrées.

Les données représentatives de la position du soleil sont par exemple fournies par un module de calcul des éphémérides du soleil, en fonction de la localisation du module bioclimatique selon l'invention. Ce module de calcul des éphémérides est soit embarqué sur la carte électronique, soit installé sur un serveur distant relié à la carte électronique par des moyens de communication, tels que des moyens de communication sans fil, du type réseau Wi-Fi du bâtiment.

Le quatrième élément est un réflecteur solaire 40 articulé sur le caisson mobile 30. Ce réflecteur solaire comprend une paroi 41 réfléchissante montée en pivotement à l'extrémité d'une première extrémité 42a de vérins 42 dont la deuxième extrémité 42b est reliée au caisson mobile 30. Comme indiqué précédemment, les vérins 42 forment des moyens de déplacement linéaire du réflecteur par rapport au caisson mobile et peuvent être formés par d'autres moyens que des vérins, qui ne sont qu'un mode de réalisation de ces moyens de déplacement linéaire de la paroi 41 par rapport à la surface vitrée 31 du caisson mobile 30. L'orientation de la paroi 41 par rapport à la surface vitrée 31 est pilotée par le pivotement de la paroi par rapport aux extrémités 42a des vérins 42 (ou tout moyen équivalent).

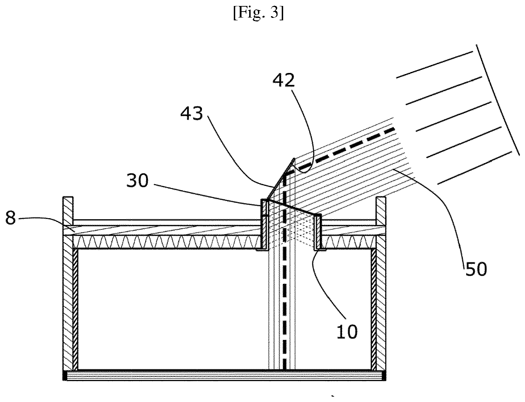

La figure 3 illustre schématiquement le rayonnement solaire 50 réfléchi par le réflecteur solaire 40 pour illuminer l'intérieur du bâtiment sur lequel la fenêtre bioclimatique est installée. Les traits en pointillés schématisent la direction principale du rayonnement solaire avant et après la réflexion par le réflecteur solaire. Cette configuration est donc particulièrement destinée à être utilisée l'hiver, dans l'hémisphère Nord ou l'été dans l'hémisphère Sud.

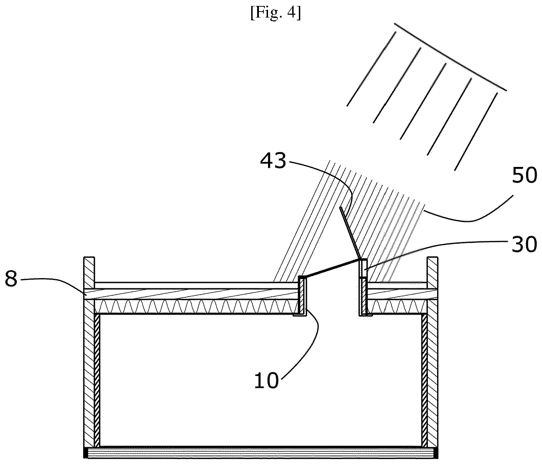

Selon un mode de réalisation avantageux, le réflecteur solaire 41 comprend en outre, sur le verso de la paroi réfléchissante 41, un store 43 configuré pour pouvoir bloquer le rayonnement solaire direct. La figure 4 illustre schématiquement le rayonnement solaire bloqué par le store 43 porté par le réflecteur solaire 40. Le store 43 permet ainsi de supprimer le rayonnement solaire direct à l'intérieur du bâtiment. Cette configuration est donc particulièrement destinée à être utilisée l'été dans l'hémisphère Nord ou l'hiver dans l'hémisphère Sud pour limiter la chaleur qui pénètre à l'intérieur du bâtiment.

La figure 5 est un plan cinématique du module bioclimatique selon l'invention. On retrouve sur cette figure le moteur électrique 25, fixe par rapport au châssis fixe 10, et en prise avec la roue dentée 21, elle-même solidaire du caisson mobile 30. Ainsi, l'activation du moteur électrique 25 permet d'entrainer en rotation la roue dentée 21, engrenée dans le pignon porté par l'axe du moteur électrique 25, et donc de générer le pivotement du caisson mobile 30, solidaire de la roue dentée, par rapport au châssis fixe 10. On observe aussi sur ces figures la présence des rouleaux 23 de centrage du caisson mobile sur le châssis fixe.

On observe aussi sur cette figure un joint torique 36 supérieur solidaire du caisson mobile 30 et un joint torique 16 supérieur du châssis fixe. On observe également sur cette figure un joint torique 37 inférieur solidaire du caisson mobile 30 et un joint torique 17 inférieur du châssis fixe. Ces joints toriques supérieurs et inférieurs permettent de maintenir l'étanchéité entre le caisson mobile et le châssis fixe, tout en permettant le pivotement du caisson mobile 30 par rapport au châssis fixe 10. D'autres moyens d'étanchéité peuvent être prévus, selon d'autres modes de réalisation, sans remettre néanmoins en cause le principe de l'invention.

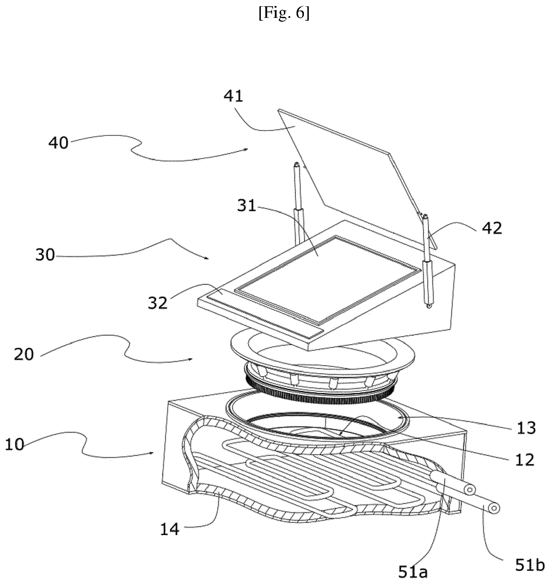

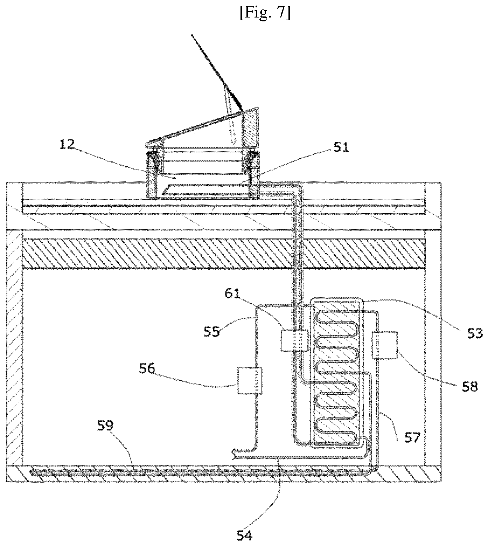

La figure 6 illustre un module bioclimatique selon un autre mode de réalisation de l'invention utilisé comme équipement d'un système de chauffage. La principale différence avec le mode de réalisation du module utilisé comme fenêtre bioclimatique (et représenté sur la figure 1 notamment) est la présence d'une paroi pleine 14 agencée au sein du châssis fixe, à l'opposé de l'ouverture supérieure 13, de manière à ce que ladite enceinte 12 devienne une enceinte hermétique qui permet d'emmagasiner la chaleur générée par le rayonnement solaire réfléchi par le réflecteur 40. En outre, le châssis comprend des ouvertures permettant l'entrée et la sortie dans l'enceinte 12 d'une conduite de circulation 51 d'un fluide caloporteur qui va capter la chaleur de l'enceinte hermétique. Cette conduite 51 est visible sur la figure 7 par l'arraché ménagé sur le châssis fixe 10. Cette conduite 51 peut être reliée à un ballon d'eau chaude d'un système de chauffage d'eau sanitaire, à un plancher chauffant ou à tout système nécessitant un fluide caloporteur chauffé. Sur la figure 6, la conduite 51 pénètre l'enceinte hermétique 12 par l'entrée 51a et ressort de l'enceinte hermétique 12 par la sortie 51b. En d'autres termes, l'entrée 51a voit arriver un fluide calorifique froid alors que la sortie 51b voit sortir un fluide calorifique réchauffé suite aux échanges thermiques qui se sont produits, au sein de l'enceinte hermétique 12, entre le fluide calorifique et l'air chaud emprisonné dans l'enceinte hermétique 12.

La figure 7 illustre schématiquement un tel module bioclimatique de chauffage relié à un ballon de stockage d'eau 53. Le principe de fonctionnement est le suivant.

Le ballon de stockage d'eau 53 est alimenté par une conduite 54 reliée à un réseau de distribution d'eau du bâtiment, non représenté sur la figure. Ce ballon de stockage d'eau 53 comprend un premier circuit fermé de circulation d'un fluide calorifique qui s'étend entre le ballon de stockage 53 et le module bioclimatique selon l'invention. Ce premier circuit comprend la conduite 51 qui circule dans l'enceinte hermétique 12. Ainsi, le fluide calorifique de la conduite 51 chauffe lors de son passage dans l'enceinte 12, comme expliqué précédemment en lien avec la figure 6. Ce fluide calorifique 12 chauffé peut alors chauffer l'eau du ballon de stockage d'eau 53.

Un deuxième circuit fermé s'étend entre le ballon de stockage d'eau 53 et un système de chauffage basse température d'un plancher chauffant 59. Ce deuxième circuit comprend une conduite 57 dans laquelle circule un fluide calorifique. Ce fluide chauffe lors du passage de la conduite 57 dans le ballon de stockage d'eau 53 (réchauffée par le premier circuit fermé décrit précédemment) et transporte la chaleur vers le plancher chauffant 59. La chaleur captée par le module bioclimatique est donc transmise au plancher chauffant par l'intermédiaire des deux circuits fermés décrits et du ballon de stockage d'eau 53.

En outre, l'eau chaude du ballon de stockage 53 peut être utilisée directement à des fins d'eau chaude sanitaire par le bais d'une conduite 55 qui alimente un circuit d'eau du bâtiment non représenté sur les figures.

Sur la figure, les blocs 56 et 58 représentent des énergies d'appoints du système de chauffage d'eau sanitaire et du plancher chauffant, nécessaires lorsque l'énergie récupérée par le module bioclimatique n'est pas suffisante. Le bloc 61 représente un groupe de circulation du fluide calorifique dans la conduite 51.

Bien entendu, d'autres moyens peuvent être utilisés pour la réalisation d'un système de chauffage utilisant le module bioclimatique selon l'invention.

Le module selon l'invention fournit une source de chaleur qui peut être utilisée pour d'autres applications et avec d'autres moyens que ceux décrits en lien avec la figure 6, qui n'est qu'un mode de réalisation possible.

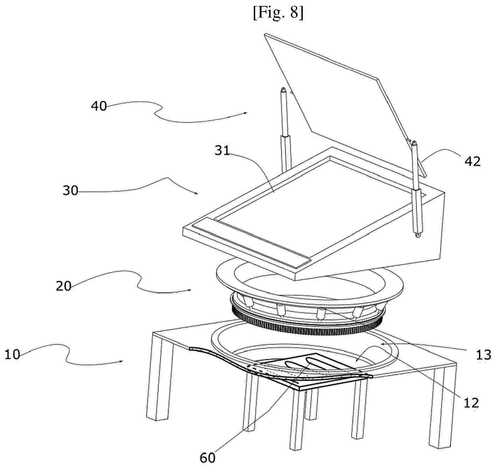

La figure 8 illustre un module bioclimatique selon un autre mode de réalisation de l'invention utilisé en tant qu'accessoire d'un système de production d'énergie. La principale différence avec les précédents modes de réalisation est la présence d'un panneau solaire 60 agencé au sein de l'enceinte 12 délimitée par le châssis fixe 10. Cette architecture permet d'améliorer le rendement du panneau solaire en optimisant le rayonnement solaire qu'il reçoit, par la combinaison du réflecteur 40 et du caisson 30 monté mobile en pivotement par rapport au châssis fixe 10, lui-même fixe par rapport au panneau solaire 60. Le module bioclimatique selon l'invention permet ainsi d'orienter le rayonnement solaire vers le panneau solaire 60 sans nécessiter de déplacer le panneau solaire, ce qui améliore son rendement.

L'homme du métier comprendra aisément que le module bioclimatique peut être utilisé pour d'autres applications que celles décrites en lien avec les figures. Toute application qui cherche à optimiser l'utilisation du rayonnement solaire peut bénéficier des avantages du module bioclimatique selon l'invention. D'une manière générale, le module bioclimatique selon l'invention est une invention de rupture qui offre une nouvelle manière de tirer le meilleur bénéfice possible du rayonnement solaire quel que soit la période de l'année et quel que soit la période de la journée.

## Revendications

1. Module bioclimatique pour bâtiment comprenant une toiture, ledit module comprenant:
- un châssis fixe (10) destiné à être solidarisé au bâti de ladite toiture du bâtiment, ledit châssis fixe (10) définissant une enceinte (12) et comprenant une ouverture, dite ouverture supérieure (13) , agencée au-dessus de ladite enceinte (12) et configurée pour pouvoir laisser passer un rayonnement solaire vers ladite enceinte (12),
- un caisson (30) monté mobile en pivotement sur ledit châssis fixe (10) et comprenant une surface vitrée (31) s'étendant en regard de ladite ouverture supérieure (13) dudit châssis fixe (10) et orientée vers le ciel, une fois le châssis (10) solidarisé au bâti de la toiture du bâtiment, de manière à pouvoir laisser passer un rayonnement solaire vers ladite ouverture supérieure (13),
- un réflecteur solaire (40) articulé sur ledit caisson mobile (30), ledit module bioclimatique étant **caractérisé en ce que** ledit réflecteur solaire (40) est configuré pour pouvoir réfléchir un rayonnement solaire incident vers ladite surface vitrée (31) dudit caisson mobile (30), ledit réflecteur (40) s'étendant au-dessus de ladite surface vitrée (31).

2. Module bioclimatique selon la revendication 1, **caractérisé en ce qu'**il comprend en outre des moyens motorisés (20) d'entrainement en pivotement dudit caisson mobile (30) sur ledit châssis fixe (10).

3. Module bioclimatique selon la revendication 2, **caractérisé en ce que** lesdits moyens motorisés (20) comprennent un moteur électrique (25) en prise avec une couronne dentée (21) solidaire dudit caisson mobile (30).

4. Module bioclimatique selon la revendication 3, **caractérisé en ce que** ladite couronne dentée (21) est surmontée d'un disque (22) portant solidairement ledit caisson mobile (30) et pourvu de rouleaux de centrage (23) dudit caisson mobile sur ledit châssis fixe.

5. Module bioclimatique selon l'une des revendications 2 à 4, **caractérisé en ce qu'**il comprend en outre une unité de commande des moyens motorisés (20) configurée pour pouvoir piloter lesdits moyens motorisés en fonction de données représentatives de la position du soleil.

6. Module bioclimatique selon la revendication 5, **caractérisé en ce qu'**il comprend en outre un capteur solaire (32) configuré pour pouvoir alimenter en énergie électrique lesdits moyens motorisés (20).

7. Module bioclimatique selon l'une des revendications 1 à 6, **caractérisé en ce que** ledit châssis fixe (10) comprend une surface inférieure transparente agencée verticalement à l'opposé de ladite ouverture supérieure (13) de manière à pouvoir laisser le rayonnement solaire pénétrer ledit bâtiment, et formant ainsi une fenêtre bioclimatique du bâtiment.

8. Module bioclimatique selon l'une des revendications 1 à 6, **caractérisé en ce que** ledit châssis (10) comprend une paroi pleine agencée verticalement à l'opposé de ladite ouverture supérieure (13) de manière à définir une enceinte hermétique permettant d'emprisonner la chaleur générée par le rayonnement solaire dans ladite enceinte (12), et formant ainsi un équipement d'un système de chauffage.

9. Module bioclimatique selon l'une des revendications 1 à 8, **caractérisé en ce qu'**il comprend en outre un store solaire (43) agencé au verso dudit réflecteur (40) solaire de manière à pouvoir bloquer le rayonnement solaire direct.

10. Module bioclimatique selon l'une des revendications 1 à 9, **caractérisé en ce qu'**il comprend en outre des moyens de déplacement linéaire dudit réflecteur (40) par rapport audit caisson mobile (30) configurés pour pouvoir déplacer ledit réflecteur (40) par rapport au caisson mobile (30).

## Patentansprüche

1. Bioklimamodul für ein Gebäude mit einem Dach, worin das Modul umfasst:
- einen festen Rahmen (10), der dazu bestimmt ist, am Rahmen des Gebäudedachs befestigt zu werden, worin der feste Rahmen (10) eine Umhüllung (12) definiert und eine als obere Öffnung (13) bezeichnete Öffnung aufweist, die oberhalb der Umhüllung (12) angeordnet und ausgestaltet ist, die Sonnenstrahlung zu der Umhüllung (12) durchzulassen,
- ein bewegliches Gehäuse (30), das schwenkbar an dem festen Rahmen (10) angebracht ist und eine verglaste Fläche (31) aufweist, die sich gegenüber der oberen Öffnung (13) des festen Rahmens (10) erstreckt und dem Himmel zugewandt ist, sobald der Rahmen (10) an der Dachstruktur des Gebäudes befestigt ist, so dass die Sonnenstrahlung in Richtung der oberen Öffnung (13) durchgelassen wird,
- einen Sonnenreflektor (40), der an dem beweglichen Gehäuse (30) angelenkt ist,
worin das bioklimatische Modul **dadurch gekennzeichnet ist, dass** der Sonnenreflektor ausgestaltet ist, einfallende Sonnenstrahlung in Richtung der verglasten Fläche (31) des beweglichen Gehäuses (30) zu reflektieren, worin sich der Reflektor (40) über die verglaste Fläche (31) erstreckt.

2. Bioklimamodul nach Anspruch 1, **dadurch gekennzeichnet, dass** dieses zudem motorisierte Mittel (20) zum Schwenken des beweglichen Gehäuses (30) auf dem festen Rahmen (10) umfasst.

3. Bioklimamodul nach Anspruch 2, **dadurch gekennzeichnet, dass** die motorisierten Mittel (20) einen Elektromotor (25) umfassen, der mit einem Zahnkranz (21) kämmt, der mit dem beweglichen Gehäuse (30) einstückig verbunden ist.

4. Bioklimamodul nach Anspruch 3, **dadurch gekennzeichnet, dass** der Zahnkranz (21) von einer Scheibe (22) überragt wird, die das bewegliche Gehäuse (30) trägt und mit Walzen (23) zum Zentrieren des beweglichen Gehäuses auf dem festen Rahmen versehen ist.

5. Bioklimamodul nach einem der Ansprüche 2 bis 4, **dadurch gekennzeichnet, dass** es zudem eine Steuereinheit (20) für die motorisierten Mittel umfasst, die ausgestaltet ist, die motorisierten Mittel in Abhängigkeit von Daten zu steuern, die für die Position der Sonne repräsentativ sind.

6. Bioklimamodul nach Anspruch 5, **dadurch gekennzeichnet, dass** dieses zudem einen Sonnenkollektor (32) umfasst, der ausgestaltet ist, die motorisierten Mittel (20) mit elektrischer Energie zu versorgen.

7. Bioklimamodul nach einem der Ansprüche 1 bis 6, **dadurch gekennzeichnet, dass** der feste Rahmen (10) eine transparente untere Fläche aufweist, die vertikal gegenüber der oberen Öffnung (13) angeordnet ist, um die Sonnenstrahlung in das Gebäude eindringen zu lassen und so ein bioklimatisches Fenster des Gebäudes zu bilden.

8. Bioklimamodul nach einem der Ansprüche 1 bis 6, **dadurch gekennzeichnet, dass** der Rahmen (10) eine massive Wand umfasst, die vertikal gegenüber der oberen Öffnung (13) angeordnet ist, um eine hermetische Umhüllung zu definieren, die die durch die Sonneneinstrahlung erzeugte Wärme in der Umhüllung (12) einschließt und somit eine Vorrichtung für ein Heizsystem bildet.

9. Bioklimamodul nach einem der Ansprüche 1 bis 8, **dadurch gekennzeichnet, dass** es zudem eine Sonnenblende (43) umfasst, die auf der Rückseite des Sonnenreflektors (40) angeordnet ist, um die direkte Sonnenstrahlung blockieren zu können.

10. Bioklimamodul nach einem der Ansprüche 1 bis 9, **dadurch gekennzeichnet, dass** dieses ferner Mittel zur linearen Verschiebung des Reflektors (40) relativ zu dem beweglichen Gehäuse (30) umfasst, die ausgestaltet sind, den Reflektor (40) relativ zu dem beweglichen Gehäuse (30) zu bewegen.

## Claims

1. Bioclimatic module for a building comprising a roof, said module comprising:
- a fixed frame (10) intended to be secured to the frame of said building roof, said fixed frame (10) defining an enclosure (12) and comprising an opening, referred to as the top opening (13), arranged above said enclosure (12) and configured to allow solar radiation to pass towards said enclosure (12),
- a movable housing (30) pivotally mounted on said fixed frame (10) and comprising a glazed surface (31) extending opposite said top opening (13) of said fixed frame (10) and facing the sky, once the frame (10) is secured to the building's roof structure, so as to allow solar radiation to pass towards said top opening (13),
- a solar reflector (40) hinged to said movable housing (30),
said bioclimatic module being **characterized in that** the solar reflector is configured to be able to reflect incident solar radiation towards said glazed surface (31) of said movable housing (30), said reflector (40) extending above said glazed surface (31).

2. Bioclimatic module according to claim 1, **characterized in that** it further comprises motorized means (20) for pivoting said movable housing (30) on said fixed frame (10).

3. Bioclimatic module according to claim 2, **characterized in that** said motorized means (20) comprise an electric motor (25) meshing with a gear ring (21) integral with said movable housing (30).

4. Bioclimatic module according to claim 3, **characterized in that** said gear ring (21) is surmounted by a disk (22) carrying said mobile housing (30) and provided with rollers (23) for centering said mobile housing on said fixed frame.

5. Bioclimatic module according to one of claims 2 to 4, **characterized in that** it further comprises a motorized means control unit (20) configured to be able to control said motorized means as a function of data representative of the position of the sun.

6. Bioclimatic module according to claim 5, **characterized in that** it further comprises a solar collector (32) configured to be able to supply said motorized means (20) with electrical energy.

7. Bioclimatic module according to one of claims 1 to 6, **characterized in that** said fixed frame (10) comprises a transparent lower surface arranged vertically opposite said upper opening (13) so as to be able to let solar radiation penetrate said building, and thus forming a bioclimatic window of the building.

8. Bioclimatic module according to one of claims 1 to 6, **characterized in that** said frame (10) comprises a solid wall arranged vertically opposite said top opening (13) so as to define a hermetic enclosure for trapping heat generated by solar radiation in said enclosure (12), and thus forming equipment of a heating system.

9. Bioclimatic module according to one of claims 1 to 8, **characterized in that** it further comprises a solar blind (43) arranged on the reverse side of said solar reflector (40) so as to be able to block direct solar radiation.

10. Bioclimatic module according to one of claims 1 to 9, **characterized in that** it further comprises means for linear displacement of said reflector (40) relative to said movable housing (30) configured to be able to move said reflector (40) relative to the movable housing (30).
